# EUROPÄISCHE PATENTSCHRIFT

(11) **EP 0 567 463 B1**
(45) Veröffentlichungstag und Bekanntmachung des Hinweises auf die Patenterteilung: **28.02.1996**
(21) Anmeldenummer: 92900399.4
(22) Anmeldetag: 06.12.1991
(51) Int. Cl.: C09D 167/06, C09D 167/02

(54) **2-KOMPONENTEN-LACKE AUF BASIS VON UNGESÄTTIGTEN POLYESTERN FÜR DIE BESCHICHTUNG VON HOLZ UND HOLZWERKSTOFFEN**
TWO COMPONENT LACQUER BASED ON UNSATURATED POLYESTERS FOR COATING TIMBER AND TIMBER MATERIALS
LAQUE A DEUX COMPOSANTS A BASE DE POLYESTERS INSATURES, SERVANT A RECOUVRIR LE BOIS ET LES MATERIAUX LIGNEUX

(30) Priorität: 19.01.1991 DE 4101529
(43) Veröffentlichungstag der Anmeldung: 03.11.1993
(73) Patentinhaber: BASF Lacke + Farben Aktiengesellschaft, D-48136 Münster (DE)
(72) Erfinder: DEPPING, Karl-Dieter, D-48165 Münster (DE); HINTZE-BRÜNING, Horst, D-48165 Münster (DE)
(86) Internationale Anmeldenummer: EP9102334
(87) Internationale Veröffentlichungsnummer: WO9213039

(56) Entgegenhaltungen:
- EP-A- 0 106 399
- WO-A-91/10713
- DE-A- 1 621 900
- DE-A- 1 770 350
- DE-A- 3 248 325

## Beschreibung

Gegenstand der vorliegenden Erfindung sind Beschichtungszusammensetzungen auf der Basis einer Lackkomponente I, die einen oder mehrere ungesättigte Polyester, Reaktivverdünner, ggf. organische Lösungsmittel und ggf. übliche Hilfs- und Zusatzstoffe enthält und einer Härterkomponente II.
Die vorliegende Erfindung betrifft außerdem ein Verfahren zur Beschichtung von Holz und Holzwerkstoffen sowie die Verwendung der Beschichtungszusammensetzungen.

Beschichtungszusammensetzungen auf der Basis von ungesättigten Polyestern und reaktiven monomeren Verbindungen sind bekannt. Ebenso ist es allgemein bekannt, daß die Eigenschaften dieser Beschichtungszusammensetzungen prinzipiell durch die Auswahl der Aufbaukomponenten des Polyesters sowie ggf. durch das Herstellverfahren der Polyester gesteuert werden können. Beispielsweise ist es bekannt (vgl. z.B. H. V. Boenig, Unsaturated Polyesters, Structure and Properties, Elsevier Co., Amsterdam, 1964), daß die Herstellung flexibler Harze durch den Einsatz von aliphatischen gesättigten Dicarbonsäuren, wie z.B. Adipinsäure und von Etherdiolen, wie z.B. Diethylenglykol, möglich ist. Jedoch ist die Styrolverträglichkeit derartiger Harze oft unzureichend und die gehärteten Systeme weisen Oberflächen auf, die für die nachfolgende Verarbeitung zu weich sind. Außerdem verschlechtert sich der sogenannte Stand der Oberflächen beim Altern der lackierten Flächen, d.h., daß die lackierten Flächen nach Alterung ihren hohen Glanz und ihre geringe Rautiefe (glasartigen Zustand) nicht beibehalten.

Bekanntermaßen werden Beschichtungszusammensetzungen auf der Basis von ungesättigten Polyestern auch für die Beschichtung von Holz und Holzwerkstoffen eingesetzt. Die im Handel erhältlichen Produkte basieren im allgemeinen auf Polyestern auf der Basis von aromatischen und ethylenisch ungesättigten Carbonsäuren. Diese Produkte sind aber insbesondere hinsichtlich der Kälterißbeständigkeit verbesserungsbedürftig.

Aus der EP-B-113 150 sind ebenfalls Beschichtungszusammensetzungen auf der Basis eines Alkydharzes für die Beschichtung von Holz oder Holzfasern enthaltenden Substraten bekannt. Das Alkydharz ist dabei aufgebaut aus 12 - 75 Gew.-% einer ethylenisch ungesättigten Monocarbonsäure mit 6 bis 24 C-Atomen, 10 - 65 Gew.-% einer gesättigten, di- oder polyvalenten cycloaliphatischen Carbonsäure mit 7 bis 11 C-Atomen, 10 - 45 Gew.-% eines Di- oder Polyols und 0,1 - 8 Gew.-% einer 2 -(2'-Hydroxiphenyl)-benzotriazol-Verbindung und/oder einer substituierten 2-Hydroxibenzophenon-Verbindung. Nachteilig bei diesen lufttrocknenden Systemen ist die ungenügende Trocknungsgeschwindigkeit bei Umgebungstemperatur, wodurch der Trocknungsprozeß über einen langen Zeitraum hinweg fortschreitet, was wiederum versprödende Filme zur Folge hat. Außerdem sind die Filmeigenschaften, wie z.B. Glanz und Härte, der resultierenden Beschichtungen verbesserungsbedürftig.

Weiterhin sind aus der EP-A-31 977 Beschichtungszusammensetzungen bekannt, die einen ungesättigten Polyester mit einer Säurezahl von 5 bis 60 mgKOH/g und einer OH-Zahl von 0 bis 30 mgKOH/g enthalten. Die ungesättigten Polyester sind dadurch gekennzeichnet, daß sie einen Gehalt von 1 bis 25 Mol-% an endständigen 1,2-Alken-dicarbonsäuren aufweisen und daß 1 bis 8 Mol-% der Dicarbonsäuregruppen in der Polyesterkette aus trans-1,2-Alken-dicarbonsäuregruppen bestehen. Beschichtungszusammensetzungen auf der Basis dieser ungesättigten Polyester weisen jedoch den Nachteil auf, daß sie aufgrund der geringen Funktionalität an aktivierten Doppelbindungen zu geringe Härtungsgeschwindigkeiten aufweisen.

Außerdem enthält die EP-A-31 977 weder einen Hinweis, diese Systeme für die Beschichtung von Holz einzusetzen noch einen Hinweis auf das Kälterißverhalten der resultierenden Beschichtungen.

Weiterhin sind aus der DE-PS 36 13 083 Beschichtungszusammensetzungen bekannt, die zu Beschichtungen mit im Vergleich zu herkömmlichen Systemen verbesserter Flexibilität und Kälterißbeständigkeit führen. Dies wird durch den Einsatz von linearen Polyestern mit Alkylseitenketten erreicht, wobei bevorzugt gesättigte Polyester eingesetzt werden. Der Einsatz von entsprechenden ungesättigten linearen Polyestern in Beschichtungszusammensetzungen ist nur in eingeschränktem Umfang möglich. Die hydrophoben Seitenketten setzen nämlich die Styrolverträglichkeit des Gesamtsystems herab. Außerdem weisen die resultierenden Lackoberflächen einen nur unzureichenden Stand auf.

Außerdem ist es aus der DE-OS 19 18 061 bekannt, daß der Einsatz cyclischer, olefinisch ungesättigter Dicarbonsäuren vom Tetrahydrophthalsäuretyp in Polyestern dazu führt, daß Beschichtungen auf der Basis dieser Polyester eine durch die gute Aushärtung der Schichten bedingte gute Schleif- und Polierbarkeit aufweisen. Nachteilig ist jedoch, daß beim Schleifen und Polieren dieser Beschichtungen das sog. "Schichten" auftritt, d.h. daß die einzelnen Schichten des Lackaufbaus markiert werden und optisch wahrnehmbar sind.

Der vorliegenden Erfindung liegt somit die Aufgabe zugrunde, Beschichtungszusammensetzungen zur Verfügung zu stellen, die die Herstellung von dickschichtigen, polier- und schleifbaren Beschichtungen von Holz und Holzwerkstoffen ermöglichen. Sie sollten insbesondere auch für die Beschichtung von Holz und Holzwerkstoffen geeignet sein, die bei der Weiterverarbeitung, Lagerung oder dem Gebrauch größeren Temperaturschwankungen (Temperaturen zwischen - 15 und + 40°C) ausgesetzt sind. Dies bedeutet, daß die resultierenden Beschichtungen eine möglichst hohe Kälterißbeständigkeit aufweisen sollten. Die Beschichtungen sollten außerdem eine hohe Oberflächenhärte, einen hohen Glanzgrad (> 60°) sowie ein gutes optisches Erscheinungsbild aufweisen. Ferner sollte sie ohne das Auftreten des sogenannten "Schichtens" schleif- und polierbar sein.

Überraschenderweise wird diese Aufgabe durch Beschichtungszusammensetzungen auf der Basis einer Lackkomponente I, die einen oder mehrere ungesättigte Polyester, Reaktivverdünner, ggf. organische Lösungsmittel und ggf. übliche Hilfs- und Zusatzstoffe enthält, und einer Lackkomponente II, die einen Härtungskatalysator enthält, gelöst. Diese Beschichtungszusammensetzungen sind dadurch gekennzeichnet, daß die Lackkomponente I mindestens einen ungesättigten Polyester (A) enthält, der erhältlich ist aus
a) 33 bis 67 Mol-% einer Mischung aus
   a₁) 30 bis 90 Mol-% mindestens einer ethylenisch ungesättigten aliphatischen Dicarbonsäure und
   a₂) 10 bis 70 Mol-% mindestens einer gesättigten aliphatischen Dicarbonsäure mit 6 bis 10 C-Atomen pro Molekül,
b) 33 bis 67 Mol-% einer Mischung aus
   b₁) 50 bis 100 Mol-% mindestens eines in 1,4-Stellung mit Methylolgruppen substituierten Cyclohexanderivates und
   b₂) 0 bis 50 Mol-% mindestens eines monomeren und/oder oligomeren Glykols mit 2 oder 3 C-Atomen pro Glykolsegment und mit einem zahlenmittleren Molekulargewicht Mₙ ≤ 500
und
c) 0 bis 10 Mol-% mindestens eines Polyols, mit der Maßgabe, daß sowohl die Summe der Anteile der Komponenten a bis c als auch die Summe der Anteile der Komponenten a₁ und a₂ als auch die Summe der Anteile der Komponenten b₁ und b₂ jeweils für sich 100 Mol-% beträgt, der Polyester (A) in einer Menge von 35 bis 60 Gew.%, bezogen auf das Gesamtgewicht der Lackkomponente I, in der Lackkomponente I enthalten ist und eine Säurezahl zwischen 10 und 60 mg KOH/g, eine OH-Zahl zwischen 5 und 100 mg KOH/g und ein zahlenmittleres Molekulargewicht zwischen 800 und 2000 aufweist.

Gegenstand der vorliegenden Erfindung sind außerdem Verfahren zum Beschichten von Holz und Holzwerkstoffen unter Verwendung dieser Beschichtungszusammensetzungen sowie die Verwendung dieser Beschichtungszusammensetzungen zur Beschichtung von Holz und Holzwerkstoffen, insbesondere zur Beschichtung von Materialien, die bei der Weiterverarbeitung, Lagerung oder dem Gebrauch Temperaturschwankungen ausgesetzt sind.

Es ist überraschend und war nicht vorhersehbar, daß die erfindungsgemäßen Beschichtungszusammensetzungen die Herstellung von dickschichtigen Aufbauten auf Holz und Holzwerkstoffen ermöglichen, die gut - ohne eine Markierung der einzelnen Schichten des Lackaufbaus - schleif - und polierbar sind, eine hohe Härte, einen guten Glanzgrad und eine gute Kratzfestigkeit aufweisen. Insbesondere zeichnen sich die Beschichtungszusammensetzungen durch eine gute Kälterißbeständigkeit der Beschichtungen aus und ermöglichen so auch den Einsatz dieser Lacke für die Beschichtung von Materialien, die bei der Weiterverarbeitung, Lagerung und dem Gebrauch größeren Temperaturschwankungen ausgesetzt sind.
Im folgenden werden nun zunächst die einzelnen Bestandteile der erfindungsgemäßen Beschichtungszusammensetzungen näher erläutert.
Als erfindungswesentlichen Bestandteil enthält die Lackkomponente I einen ungesättigten Polyester, der aus
a) 33 bis 67 Mol-%, bevorzugt 50 bis 60 Mol-%, Dicarbonsäuren,
b) 33 bis 67 Mol-%, bevorzugt 40 bis 50 Mol-%, Diolen und
c) 0 bis 10 Mol-%, bevorzugt 0 bis 5 Mol-%, Polyolen aufgebaut ist, wobei die Dicarbonsäurekomponente a eine Mischung aus
   a₁) 30 bis 90 Mol-%, bevorzugt 50 bis 70 Mol-%, mindestens einer ethylenisch ungesättigten aliphatischen Dicarbonsäure und
   a₂) 10 bis 70 Mol-%, bevorzugt 30 bis 50 Mol-%, mindestens einer gesättigten aliphatischen Dicarbonsäure mit 6 bis 10C-Atomen pro Molekül,
   ist und wobei die Diolkomponente b eine Mischung aus
   b₁) 50 bis 100 Mol-%, bevorzugt 70 bis 100 Mol-%, 1,4-Dimethylolcyclohexan oder mindestens eines mit Alkylgruppen substituierten 1,4-Dimethylolcyclohexans und
   b₂) 0 bis 50 Mol-%, bevorzugt 0 bis 30 Mol-%, mindestens eines monomeren und/oder oligomeren Glykols mit 2 oder 3 C-Atomen pro Glykolsegment und mit einem zahlenmittleren Molekulargewicht Mₙ ≤ 500, bevorzugt Mₙ ≤ 200 ist, mit der Maßgabe, daß sowohl die Summe der Anteile der Komponenten a₁ und a₂ als auch die Summe der Anteile der Komponenten b₁ und b₂ als auch die Summe der Anteile der Komponenten a bis c jeweils für sich 100 Mol-% beträgt, der Polyester (A) in einer Menge von 35 bis 60 Gew.%, bezogen auf das Gesamtgewicht der Lackkomponente I, in der Lackkomponente I enthalten ist und eine Säurezahl zwischen 10 und 60 mg KOH/g, eine OH-Zahl zwischen 5 und 100 mg KOH/g und ein zahlenmittleres Molekulargewicht zwischen 800 und 2000 aufweist.

Als Komponente a₁ geeignet sind alle ethylenisch ungesättigten aliphatischen Dicarbonsäuren, wie z.B. Maleinsäure, Fumarsäure, Itaconsäure und Citraconsäure sowie Mischungen dieser Dicarbonsäuren. Bevorzugt werden Maleinsäure und/oder Fumarsäure und besonders bevorzugt Fumarsäure eingesetzt. Diese Säuren können in Form der freien Säuren oder ihrer veresterungsfähigen Derivate (z.B. Anhydride) oder ihrer umesterungsfähigen Derivate (z.B. Methylester) eingesetzt werden. Insbesondere können Fumarsäure oder Fumarsäurederivate in Form der isomeren Maleinsäure bzw. Maleinsäurederivate eingesetzt werden und während der Polyestersynthese bei höheren Temperaturen zur Fumarsäure bzw. Fumarsäurederivaten isomerisiert werden.

Als Komponente a₂ geeignet sind alle gesättigten aliphatischen Dicarbonsäuren mit 6 bis 10 C-Atomen pro Molekül, wie z.B. Adipinsäure, Pimelinsäure, Suberinsäure, Acelainsäure und Sebacinsäure sowie Mischungen dieser Dicarbonsäuren. Bevorzugt wird Adipinsäure eingesetzt. Diese Säuren können in Form der freien Säuren oder ihrer umesterungsfähigen Derivate (z.B. Methylester) oder ihrer veresterungsfähigen Derivate (z.B. Anhydride) eingesetzt werden.

Als Komponente b₁ geeignet sind in 1,4-Stellung mit CH₂OH-Gruppen substituierte Cyclohexanderivate, wobei bevorzugt 1,4-Dimethylolcyclohexan eingesetzt wird. Geeignet sind ferner mit Alkylgruppen substituierte 1,4-Dimethylolcyclohexane.

Beispiele für geeignete monomere oder oligomere Glykole mit 2 bis 3 C-Atomen pro Glykolsegment und zahlenmittleren Molekulargewichten ≤ 500, bevorzugt ≤ 200 (Komponente b₂) sind Ethylenglykol, Propylenglykol-1,2 und -1,3, Diethylenglykol, Dipropylenglykol, Triethylenglykol, Tetraethylenglykol u.ä. Bevorzugt eingesetzt werden Diethylenglykol, Dipropylenglykol und Triethylenglykol.

Als Komponente c geeignet sind Polyole, insbesondere Triole, wie z.B. Glycerin, Trimethylolpropan, Trimethylolethan, Pentaerythrit, Ditrimethylolpropan, Diglycerin sowie deren durch Alkoxilierung, bevorzugt Ethoxilierung und Propoxilierung, erhältlichen Derivate sowie Mischungen dieser Verbindungen. Bevorzugt werden Trimethylolpropan und alkoxiliertes Trimethylolpropan mit einem zahlenmittleren Molekulargewicht Mn ≤ 1000 eingesetzt.

Diese ungesättigten Polyester können nach den üblichen Verfahren hergestellt werden (vgl. z.B. Houben Weyl, Methoden der organischen Chemie, 4. Auflage, Band 14/2, Georg Thieme Verlag, Stuttgart 1961). Sie weisen Säurezahlen zwischen 10 und 60 mgKOH/g, bevorzugt zwischen 30 und 50 mgKOH/g sowie OH-Zahlen zwischen 5 und 100 mgKOH/g, bevorzugt zwischen 25 und 40 mgKOH/g auf. Die zahlenmittleren Molekulargewichte dieser Polyester liegen zwischen 800 und 2000.
Die ungesättigten Polyester (Komponente A) werden in den erfindungsgemäßen Beschichtungszusammensetzungen in einer Menge von 35 bis 60 Gew.-%, bevorzugt von 41 bis 54 Gew.-%, jeweils bezogen auf das Gesamtgewicht der Lackkomponente I, eingesetzt.

Zusätzlich zu dem ungesättigten Polyester A können die erfindungsgemäßen Beschichtungszusammensetzungen noch weitere ethylenisch ungesättigte polymere Verbindungen enthalten (Komponente B). Insbesondere kommen weitere, ungesättigte Polyester zum Einsatz. Diese ungesättigten Polyester können linear oder verzweigt sein und auf der Basis verschiedener aliphatischer, cycloaliphatischer und aromatischer Di- und Polycarbonsäuren bzw. Di- und Polyole aufgebaut sein.

Bevorzugt werden als Komponente B ungesättigte lineare Polyester mit Alkylseitenketten eingesetzt. Diese Polyester sind beispielsweise analog zur Verfahrensvorschrift der DE-PS 36 13 083 herstellbar, indem entsprechende ethylenisch ungesättigte Aufbaukomponenten eingesetzt werden. Die Verwendung von linearen ungesättigten Polyestern mit Alkylseitenketten im angegebenen Verhältnis zur Komponente A hat den Vorteil, daß eine gute Einarbeitung von Wachsen in das Lacksystem und eine höhere Hydrophobie und Elastizität der Lackfilme gegeben ist.

Es können selbstverständlich auch Mischungen verschiedener ungesättigter Polyester eingesetzt werden.

Die Komponente B wird in den erfindungsgemäßen Beschichtungszusammensetzungen üblicherweise in einer Menge von 0 bis 20 Gew.-%, bevorzugt 5 bis 15 Gew.-%, jeweils bezogen auf das Gesamtgewicht der Lackkomponente I, eingesetzt. Bevorzugt liegt das Mischungsverhältnis der Komponente A zu der Komponente B zwischen 6 : 1 und 3 : 1.

Als weiteren Bestandteil (Komponente C) enthalten die erfindungsgemäßen Beschichtungsmittel mindestens einen Reaktivverdünner, bevorzugt in einer Menge von 29 bis 50 Gew.-%, jeweils bezogen auf das Gesamtgewicht der Lackkomponente I.
Als Reaktivverdünner geeignet sind ethylenisch ungesättigte Verbindungen, insbesondere Vinylaromaten, wie z.B. Styrol, Vinyltoluol, t-Butylstyrol, Divinylbenzol, α-Methylstyrol, Chlorstyrole, Bromstyrole, Vinylpyridin, Vinylnaphthalin u.ä., Vinylester von Carbonsäuren mit 2 bis 6 C-Atomen, wie z.B. Vinylacetat, Vinylpropionat, Vinylpivalat, Allylphthalat, Diallylphthalat, Trialkylcyanurat, Triallylisocyanurat, Alkylacrylate, Alkylmethacrylate, Alkandioldi(meth)acrylate u.ä. Geeignet sind auch Mischungen verschiedener Reaktivverdünner. Bevorzugt werden Vinylaromaten und besonders bevorzugt Styrol und eine Mischung aus Styrol und Vinyltoluol eingesetzt.
Außerdem können die erfindungsgemäßen Beschichtungsmittel noch organisches Lösungsmittel (Komponente D) enthalten. Die Lackkomponente I enthält üblicherweise 0 bis 15 Gew.-%, bevorzugt 2 bis 5 Gew.-%, bezogen auf das Gesamtgewicht der Lackkomponente I, Lösungsmittel.

Als Lösungsmittel geeignet sind beispielsweise aliphatische, cycloaliphatische und aromatische Kohlenwasserstoffe, insbesondere verschiedene Testbenzine sowie Ester und Alkohole. Diese Lösungsmittel sind dem Fachmann bekannt und brauchen daher hier nicht näher erläutert zu werden.

Weiterhin enthalten die erfindungsgemäßen Beschichtungszusammensetzungen üblicherweise noch 0 bis 7 Gew.-%, bevorzugt 1,5 bis 5 Gew.-%, jeweils bezogen auf das Gesamtgewicht der Lackkomponente I, Pigmente und/oder Füllstoffe (Komponente E). Geeignet sind sowohl organische als auch anorganische Pigmente, z.B. Anilinschwarz, Cl Pigment Black 1. Als Füllstoffe werden beispielsweise Talkum, Glimmer, Bariumsulfat, Silikate u.ä. eingesetzt, wobei im Falle der Beschichtungszusammensetzungen für Musikinstrumente bevorzugt Kieselsäure eingesetzt wird.

Schließlich enthalten die Beschichtungszusammensetzungen üblicherweise noch 1,0 bis 4,0 Gew.-%, bevorzugt 1,0 bis 2,0 Gew.-%, jeweils bezogen auf das Gesamtgewicht der Lackkomponente I, weitere Hilfs- und Zusatzstoffe. Zu nennen sind hier insbesondere Paraffin-Wachse. Es handelt sich dabei um Gemische von gereinigtem, überwiegend geradkettigen Kohlenwasserstoff der allgemeinen Formel CₙH₂ₙ₊₂ mit Ölgehalten von maximal 0,5 bis 3 % nach DIN-ISO 2908. Bevorzugt sind Wachse mit einem Schmelzbereich zwischen 44 und 48°C und/oder Wachse mit einem Schmelzbereich zwischen 52 und 54°C.
Das Mischungsverhältnis der Paraffine mit einem Schmelzbereich zwischen 52 und 54°C zu solchen mit einem Schmelzbereich zwischen 44 und 48°C liegt üblicherweise zwischen 1 : 1 und 2 : 3.
Als weitere Hilfs- und Zusatzstoffe können noch Beschleuniger, z.B. Derivate der Acetessigsäure sowie Polymerisationsinhibitoren, z.B. Hydrochinone, Methylhydrochinone und Benzochinone, eingesetzt werden.

Als weiteren Bestandteil enthält die erfindungsgemäße Beschichtungszusammensetzung eine Härterkomponente II. Diese Härterkomponente II besteht üblicherweise aus einer Beschleunigerkomponente II-1 und einer Härterkomponente II-2.
Die Beschleunigerkomponente II-1 enthält üblicherweise organische Lösungsmittel in üblichen Mengen, bevorzugt 50 bis 90 Gew.-%, bezogen auf das Gewicht der Beschleunigerkomponente II-1. Durch den Lösungsmittelgehalt dieser Beschleunigerkomponente II-1 kann selbstverständlich auch der Lösungsmittelgehalt und damit die Verarbeitungsviskosität der erfindungsgemäßen Beschichtungszusammensetzung gesteuert werden. Als Lösungsmittel geeignet sind die bereits bei der Beschreibung der Lackkomponente I genannten Lösungsmittel.

Außerdem enthält die Beschleunigerkomponente II-1 Trockenstoffe in üblichen Mengen, bevorzugt 10 bis 50 Gew.-%, bezogen auf das Gewicht der Beschleunigerkomponente II-1. Beispiele für geeignete Trockenstoffe sind Metallsalze (cyclo)aliphatischer, natürlicher oder synthetischer Säuren, wie z.B. Metallsalze der Linolsäure, Naphthensäure, Octansäure oder 2-Ethylhexansäure, wobei als geeignete Metalle Cobalt, Mangan, Blei, Zirkon, Calcium, Zink und Wismut zu nennen sind. Bevorzugt werden Mischungen von Sikkativen eingesetzt.
Die Härterkomponente II-2 enthält üblicherweise organische Lösungsmittel, Weichmacher, Peroxide und ggf. Wasser in üblicher Mengen. Bevorzugt enthält die Härterkomponenten II-2 0 bis 90 Gew.-%, besonders bevorzugt 70 bis 85 Gew.-%, organische Lösungsmittel sowie bevorzugt 3 bis 60 Gew.-% Weichmacher, 6,5 bis 40 Gew.-% Peroxid und 0 bis 1 Gew.-% Wasser.

Beispiele für geeignete organische Lösungsmittel sind die bereits bei der Beschreibung der Lackkomponente I aufgeführten Lösungsmittel.
Beispiele für geeignete Weichmacher sind die Alkylester der Phthalsäure, z.B. Dimethylphthalat, Diethylphthalat, Dibutylphthalat, Dihexylphthalat, Dioctylphthalat und andere üblicherweise eingesetzte Weichmacher, die mit der Beschichtungszusammensetzung verträglich sind.
Beispiele für geeignete Peroxide sind insbesondere organische Peroxide, wie z.B. Cyclohexanonperoxid und Methylethylketonperoxid oder Kombinationen dieser beiden.

Die Beschleunigerkomponente II-1 und die Härterkomponente II-2 werden üblicherweise getrennt gelagert und mit der Lackkomponente I gemischt (3-Komponenten-Lack), oder die Beschleunigerkomponente II-1 wird der Lackkomponente I direkt zugegeben und die Härterkomponente II-2 wird kurz vor der Applikation (maschinell oder von Hand) zugegeben.

Die Lackkomponente I sowie die Beschleunigerkomponente II-1 und die Härterkomponente II-2 werden in einem solchen Verhältnis miteinander gemischt, daß die Topfzeit (Zeit während der das Gemisch verarbeitbar ist) bevorzugt zwischen 5 und 10 min beträgt und daß die Gelierzeit nach der Applikation der Beschichtungszusammensetzung bevorzugt zwischen 8 und 12 min liegt. Bevorzugte Beschichtungszusammensetzungen werden erhalten, wenn die Beschleunigerkomponente II-1 in einer Menge von 0,5 bis 5,0 Gew.-%, bezogen auf 100 Gewichtsteile Lackkomponente I, eingesetzt wird. Der Metallgehalt der Beschichtungszusammensetzung liegt bevorzugt zwischen 0,1 und 2,0 %, bezogen auf das Gewicht der Lackkomponente I. Die Härterkomponente II-2 wird bevorzugt in einer solchen Menge eingesetzt, daß die Peroxidmenge von 0,5 bis 2,0 Gew.-%, bezogen auf das Gewicht der Lackkomponente I beträgt. Je nach gewählten Bindemitteln, Trockenstoffen und Härterkomponenten können allerdings auch andere Einsatzmengen der Beschleunigerkomponente II-1 und der Härterkomponente II-2 vorteilhaft sein.

Die Herstellung der Lackkomponente I und der Härterkomponente II erfolgt in üblicher Weise durch Vermischen und ggf. Dispergieren. Mitunter ist es angezeigt, eine Komponente zunächst in einem Lösungsmittel zu lösen und diese Lösung mit den übrigen Komponenten zu vermischen. Zur Einarbeitung der Pigmente können einerseits die verschiedenen Pigmente mit dem Bindemittel zusammen angemahlen werden oder die Lackkomponente I wird als Auflackgut für eine Pigmentpaste verwendet.
Die Beschichtungszusammensetzungen können durch Spritzen, Gießen, Fluten, Tauchen, Streichen, Rakeln oder Walzen, bevorzugt Spritzen und Gießen, aufgebracht werden, wobei der Film anschließend bei Umgebungstemperatur aushärtet. Bevorzugt erfolgt die Gelierung des applizierten Films während einer Zeit von 8 bis 12 min.

Es besteht allerdings auch die Möglichkeit, die Beschichtungszusammensetzungen mittels Strahlung, insbesondere UV- oder Elektronenstrahlung, zu härten, wobei dann als Härterkomponente II entsprechende Initiatoren zu wählen sind.
Die Beschichtungszusammensetzungen werden üblicherweise mit einer Trockenfilmschichtdicke von 600 bis 1000 /um, bevorzugt von 700 bis 800 /um, aufgebracht, können aber je nach Anwendungszweck mit einer anderen Schichtdicke aufgebracht werden.
Die erfindungsgemäßen Beschichtungszusammensetzungen eignen sich inbesondere für die Beschichtung von Holz und Holzwerkstoffen, wie beispielsweise Spanplatten u.ä. Sie können aber auch auf andere Substrate, beispielsweise Metall, Glas, Kunststoff, Papier usw. aufgebracht werden. Aufgrund der hohen Kälterißbeständigkeit der resultierenden Beschichtungen eignen sich die Beschichtungszusammensetzungen besonders gut für die Beschichtung von Materialien, die bei der Weiterverarbeitung, Lagerung oder dem Gebrauch größeren Temperaturschwankungen (von -15 bis 40 °C)ausgesetzt sind.
Typische Einsatzgebiete der erfindungsgemäßen Beschichtungszusammensetzungen sind die Lackierung von Musikinstrumenten aus Holz, insbesondere Pianos, die Lackierung von Möbeln und Holzarmaturenbrettern, Ablagen u.ä. in Automobilen.

Im folgenden wird nun die Erfindung anhand von Ausführungsbeispielen näher erläutert. Alle Angaben über Teile und Prozente sind dabei Gewichtsangaben, falls nicht ausdrücklich etwas anderes festgestellt wird.

### 1. Herstellung der ungesättigten Polyester 1 und V1 bis V7

Die Polyester werden in einem mit Rührer, beheizter Füllkörperkolonne, Thermoelement und Stickstoffzuleitung versehenen, temperierbaren 3-1-Reaktionskessel folgendermaßen hergestellt:
Die in Tabelle 1 angegebenen Rohstoffe werden in einer Stickstoffatmosphäre eingewogen und auf 150°C aufgeheizt. Nach dem Abklingen einer ggf. auftretenden exothermen Reaktion beim Einsatz von Dicarbonsäureanhydriden wird innerhalb von 5 h auf 200°C aufgeheizt. Nach Erreichen einer Säurezahl des Polyesters von 65 bis 70 mgKOH/g wird die Temperatur innerhalb einer Zeit von 4 h auf 215°C gesteigert. Die Polykondensation wird solange bei 215°C fortgeführt, bis die folgenden Kennzahlen erreicht sind, wobei während der gesamten Synthese der Polyester darauf zu achten ist, daß die Kolonnenkopftemperatur 100°C nicht übersteigt:

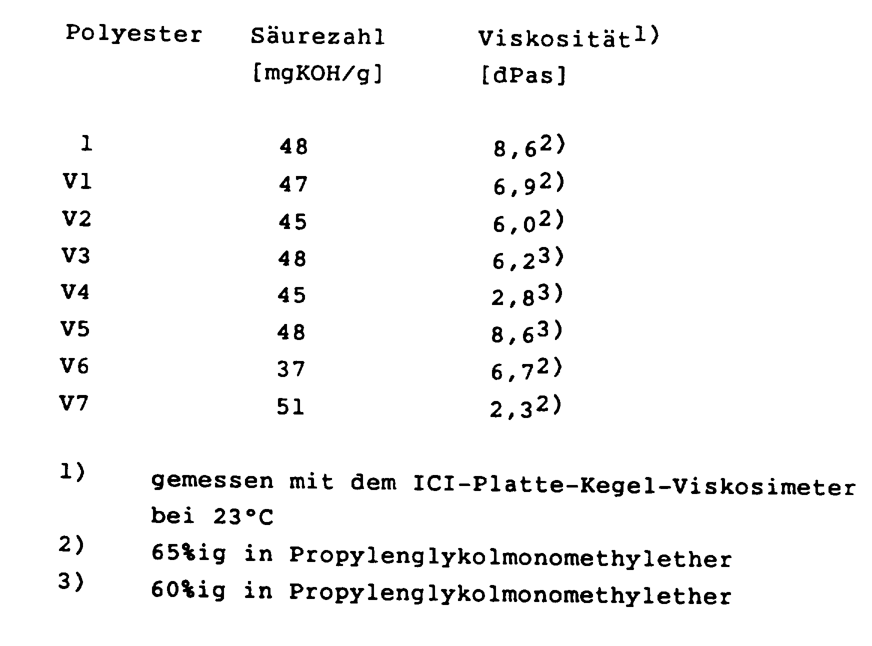

Nach dem Erreichen der Kennzahlen wird die Reaktionsmischung auf 100°C abgekühlt, mit 0,02 % Hydrochinon, bezogen auf das Gewicht der Reaktionsmischung, versetzt und mit Styrol auf einen Festkörper (1 h, 130°C) von 60 ± 5 % angelöst. Die erhaltenen Polyesterharzlösungen haben folgende Kennzahlen:

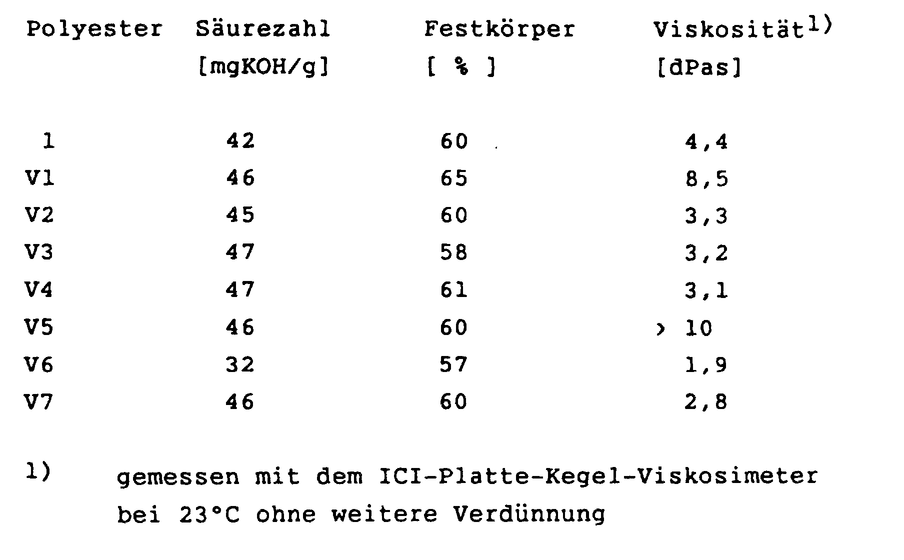

### 2. Herstellung eines seitenkettenmodifizierten ungesättigten Polyesters 2

In dem unter 1. beschriebenen Reaktionskessel werden 13,5 Teile Kokosvorlauffettsäure und 12,5 Teile Trimethylolpropan solange auf 190°C erhitzt, bis eine Säurezahl < 15 mgKOH/g erreicht ist. Dann wird auf 115°C abgekühlt und nun werden 13,0 Teile Propylenglykol, 15,6 Teile Maleinsäureanhydrid und 14,0 Teile Phthalsäureanhydrid zugegeben. Innerhalb von 8 h wird die Reaktionsmischung auf 215°C erhitzt und solange bei dieser Temperatur gehalten, bis die Säurezahl des Polyesters 55 mgKOH/g und die Viskosität einer 65 %igen Lösung des Polyesters in Propylenglykolmonomethylether 6,8 dPas beträgt (gemessen bei 23°C mit dem ICI-Platte-Kegel-Viskosimeter). Die Reaktionsmischung wird auf 100°C abgekühlt, mit 0,01 % Hydrochinon, bezogen auf das Gewicht der Reaktionsmischung, versetzt und mit Styrol auf einen Festkörper (1 h, 130°C) von 65 % angelöst. Die so erhaltene Polyesterharzlösung hat eine Viskosität von 6,5 dPas (gemessen 60%ig in Styrol bei 23°C mit dem ICI-Platte-Kegel-Viskosimeter).

### Beispiel 1

Aus den in Tabelle 2 angegebenen Bestandteilen wurde durch Vermischen und ggf. Dispergieren der Bestandteile eine Lackkomponente I-1 hergestellt. Das Styrol der Polyesterharzlösungen 1, 2 und V1 bis V7 ist dabei in Tabelle 2 im angegebenen Styrolanteil enthalten.

Zur Herstellung der Beschichtungszusammensetzung 1 wurden 100 Teile der Lackkomponente I-1 mit 0,5 Gew.-%, bezogen auf das Gewicht der Lackkomponente I-1, einer Cobaltnaphthenat-Lösung II-1-1 in Toluol (Metallgehalt der Lösung 1,6 %) versetzt. Ferner wurden 10 Vol.-%, bezogen auf das Volumen der Lackkomponente I-1, einer Härterlösung II-2-1 zugesetzt. Die Härterlösung II-2-1 enthält dabei 14 Gew.-%, bezogen auf das Gewicht der Härterlösung II-2-1, Cyclohexanonperoxid, phlegmatisiert mit 10 % Wasser, bezogen auf das Gewicht des Cyclohexanonperoxids. Der Aktivsauerstoffgehalt der Härterlösung II-2-1 beträgt 13 %. Ferner enthält die Härterlösung II-2-1 6 Gew.-% Dibutylphthalat, bezogen auf das Gewicht der Härterlösung sowie 80 Gew.-% Ethylacetat als Lösungsmittel.
Zur Herstellung von Testtafeln wurden zunächst mit Macore-Furnier belegte Spanplatten der Größe 300 x 200 x 10 mm mit einem handelsüblichen, schwarzpigmentierten Füller auf der Basis ungesättigter allylgruppenhaltiger Polyesterharze vorbehandelt. Die Beschichtung der Spanplatten mit dem Füller erfolgte dabei beidseitig in mehreren Schichten mit jeweiliger Zwischengelierung in einer Trockenfilmschichtdicke von 350 /µm. Die Aushärtung des Füllers wurde unter Raumklima während einer Zeit von 3 Tagen vorgenommen, wobei darauf geachtet wurde, daß die Temperatur von + 21°C nicht unterschritten wurde. Die so hergestellten Testtafeln wurden dann mit Schleifpapier der Körnung 180 geschliffen.
Auf die so vorbehandelten Testtafeln wurde die Beschichtungszusammensetzung in drei Arbeitsgängen mit einer Zwischengelierung während einer Zeit von 8 bis 12 min. in einer Gesamt-Trockenfilmschichtdicke von 600 bis 700 µm aufgebracht und durch Lagerung während einer Zeit von 10 Tagen bei Normalklima ausgehärtet. Danach wurden die Flächen entsprechend den üblichen Praxisbedingungen geschliffen und geschwabbelt bzw. poliert. Danach werden sie den in Tabelle 3 angegebenen Prüfungen unterzogen. Die Prüfergebnisse sind ebenfalls in Tabelle 3 dargestellt.

### Vergleichsbeispiele 1 bis 7

Aus den in Tabelle 2 angegebenen Bestandteilen wurden durch Vermischen und ggf. Dispergieren der Bestandteile die Lackkomponenten I-V1 bis I-V7 hergestellt. 100 Teile der jeweiligen Lackkomponente I-V1 bis I-V7 wurden analog zu Beispiel 1 mit 0,5 Gew.-% der Cobaltnaphthenat-Lösung II-1-1 (Metallgehalt 1,6 %) und 10 Vol.-% der in Beispiel 1 beschriebenen Härterlösung II-2-1 versetzt, wobei alle Prozentangaben auf die Lackkomponente I bezogen sind.
Die Applikation der so erhaltenen Beschichtungszusammensetzungen V1 bis V7 erfolgte analog Beispiel 1 auf die ebenfalls in Beispiel 1 beschriebenen vorbehandelten Testplatten. Die Aushärtung der Beschichtungszusammensetzungen V1 bis V7 sowie die Prüfung der resultierenden Beschichtungen erfolgte ebenfalls analog zu Beispiel 1. Die Prüfergebnisse sind in Tabelle 3 dargestellt.

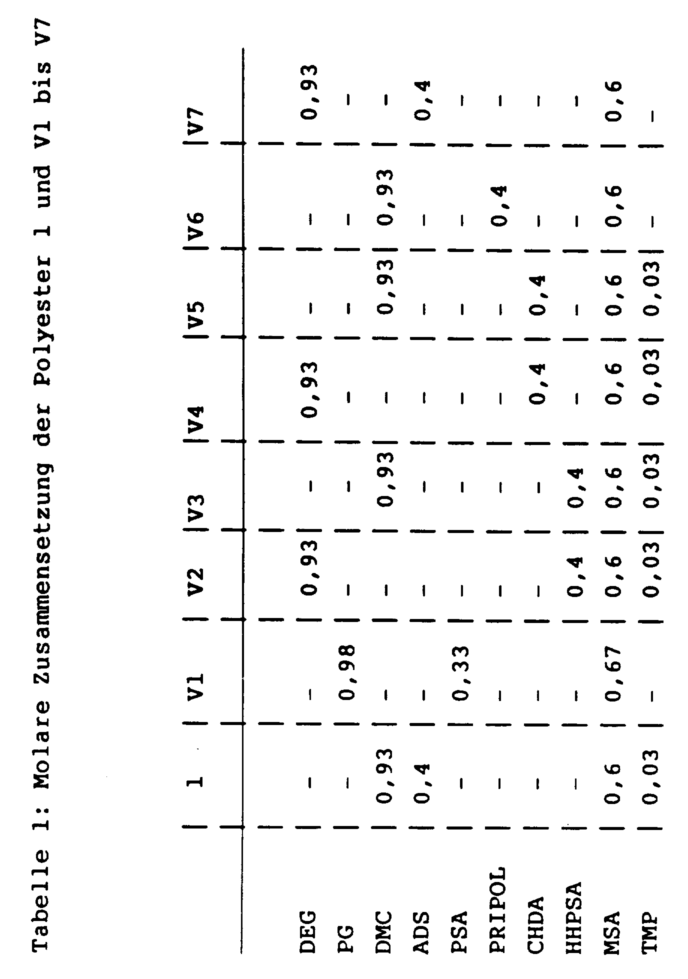

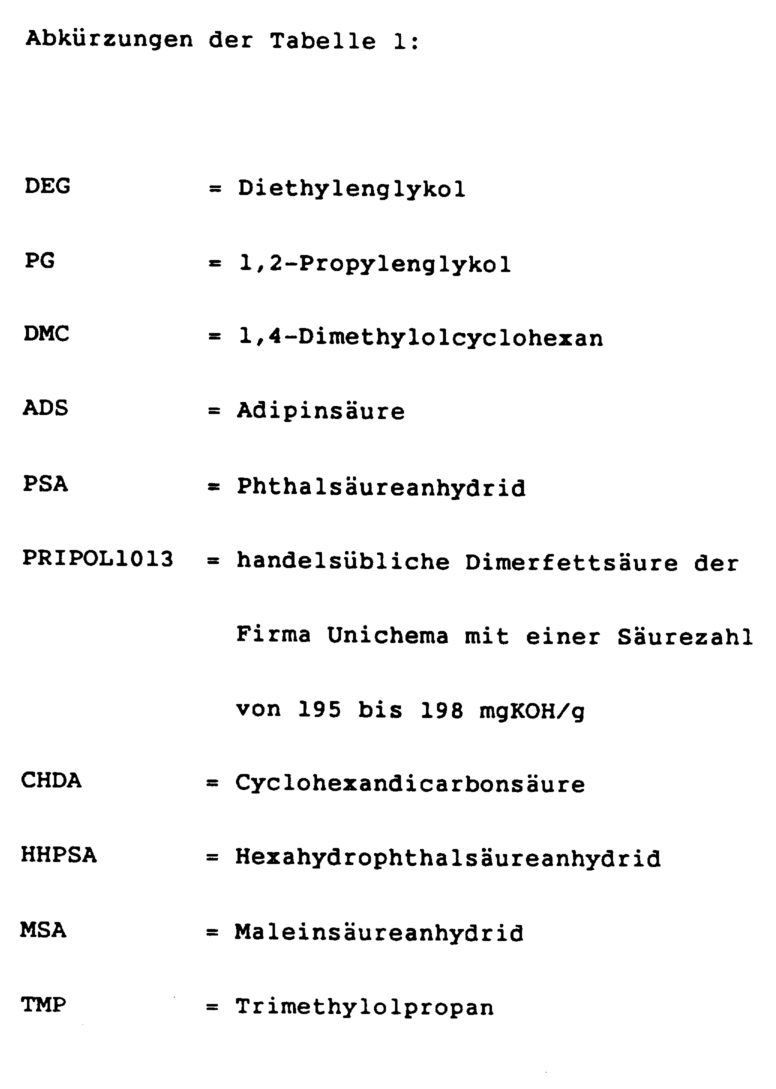

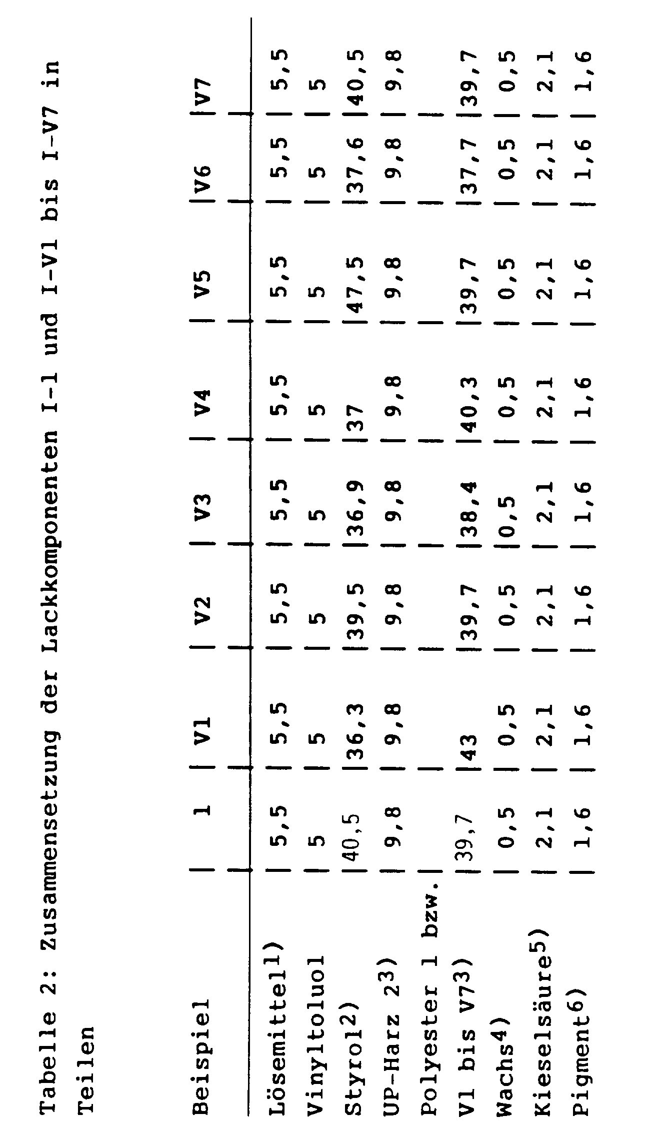

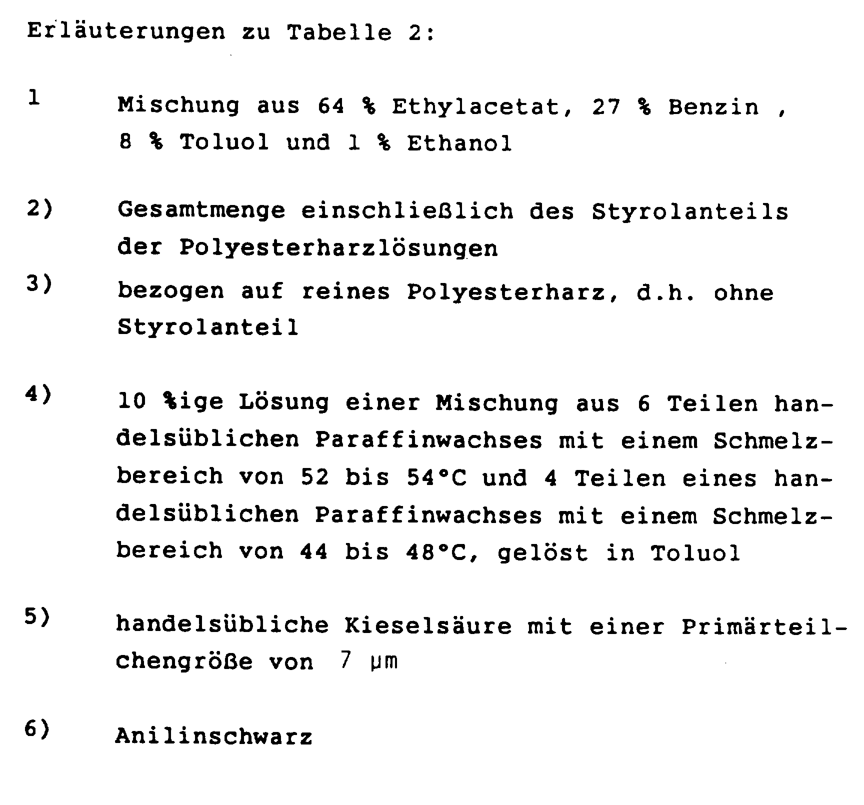

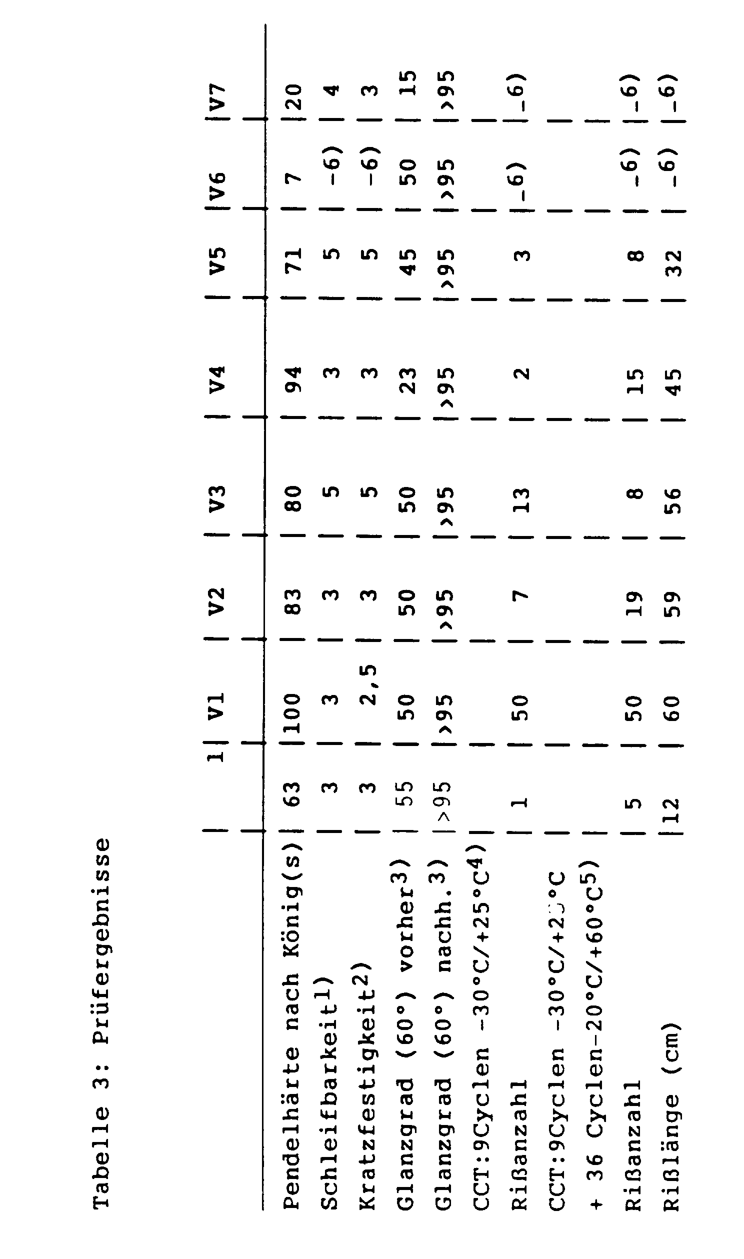

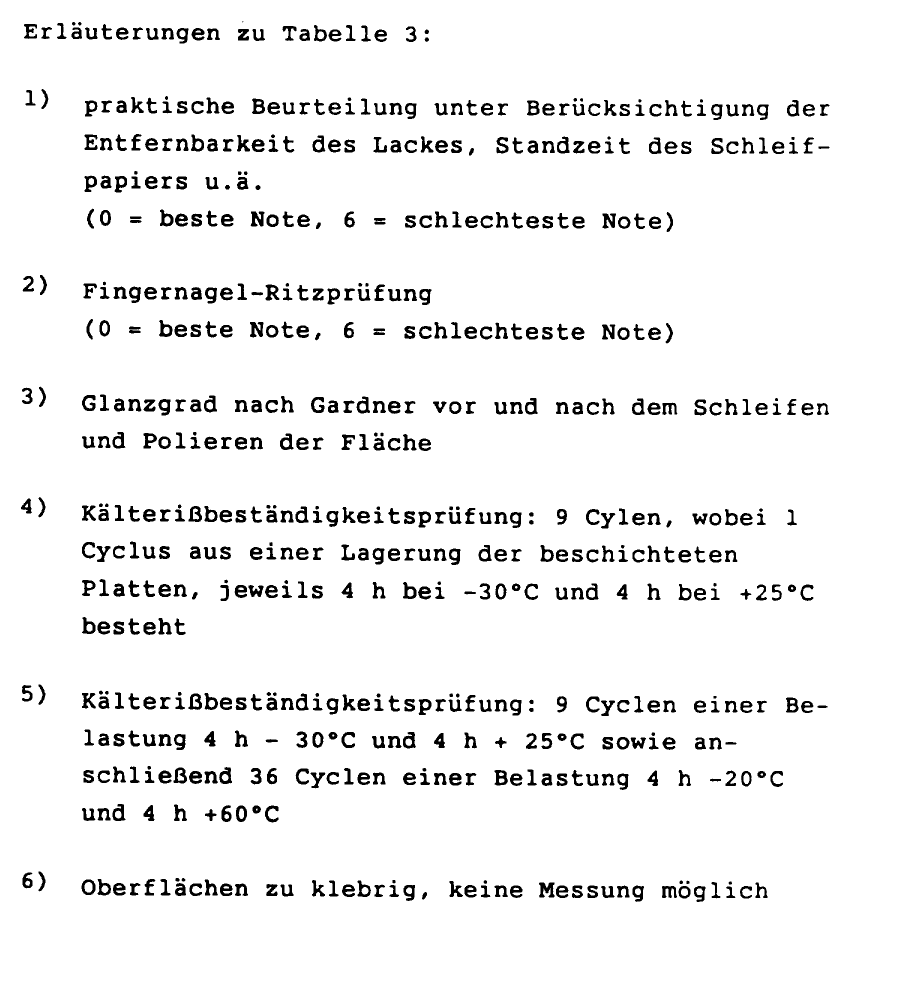

## Patentansprüche

1. Beschichtungszusammensetzung auf der Basis einer Lackkomponente I, die einen oder mehrere ungesättigte Polyester, Reaktivverdünner, ggf. organische Lösungsmittel und ggf. übliche Hilfs- und Zusatzstoffe enthält, und einer Lackkomponente II, die einen Härtungskatalysator enthält, dadurch gekennzeichnet, daß die Lackkomponente I mindestens einen ungesättigten Polyester (A) enthält, der erhältlich ist aus
a) 33 bis 67 Mol-% einer Mischung aus
a₁) 30 bis 90 Mol-% mindestens einer ethylenisch ungesättigten aliphatischen Dicarbonsäure und
a₂) 10 bis 70 Mol-% mindestens einer gesättigten aliphatischen Dicarbonsäure mit 6 bis 10 C-Atomen pro Molekül,
b) 33 bis 67 Mol-% einer Mischung aus
b₁) 50 bis 100 Mol-% 1,4-Dimethylolcyclohexan oder mindestens eines mit Alkylgruppen substituierten 1,4-Dimethylolcyclohexans und
b₂) 0 bis 50 Mol-% mindestens eines monomeren und/oder oligomeren Glykols mit 2 oder 3 C-Atomen pro Glykolsegment und mit einem zahlenmittleren Molekulargewicht Mn ≤ 500 und
c) 0 bis 10 Mol-% mindestens eines Polyols,
mit der Maßgabe, daß sowohl die Summe der Anteile der Komponenten a bis c als auch die Summe der Anteile der Komponenten a₁ und a₂ als auch die Summe der Anteile der Komponenten b₁ und b₂ jeweils für sich 100 Mol-% beträgt, der Polyester (A) in einer Menge von 35 bis 60 Gew.%, bezogen auf das Gesamtgewicht der Lackkomponente I, in der Lackkomponente I enthalten ist und eine Säurezahl zwischen 10 und 60 mg KOH/g, eine OH-Zahl zwischen 5 und 100 mg KOH/g und ein zahlenmittleres Molekulargewicht zwischen 800 und 2000 aufweist.

2. Beschichtungszusammensetzung nach Anspruch 1, dadurch gekennzeichnet, daß die Lackkomponente I mindestens einen ungesättigten Polyester (A) enthält, der erhältlich ist aus
a) 50 bis 60 Mol-% der Dicarbonsäurekomponente a,
b) 40 bis 50 Mol-% der Diolkomponente b und
c) 0 bis 5 Mol-% der Polyolkomponente c,
wobei die Summe der Gewichtsanteile der Komponenten a bis c jeweils 100 Mol-% beträgt.

3. Beschichtungszusammensetzung nach Anspruch 1 oder 2, dadurch gekennzeichnet, daß die Dicarbonsäurekomponente a des Polyesters (A) aus
a₁) 50 bis 70 Mol-% mindestens einer ethylenisch ungesättigten aliphatischen Dicarbonsäure und
a₂) 30 bis 50 Mol-% mindestens einer gesättigten aliphatischen Dicarbonsäure mit 6 bis 10 C-Atomen pro Molekül
besteht, wobei die Summe der Anteile der Komponenten a₁ und a₂ jeweils 100 Mol-% beträgt.

4. Beschichtungszusammensetzung nach einem der Ansprüche 1 bis 3, dadurch gekennzeichnet, daß die Diolkomponente b des Polyesters (A) aus
b₁) 70 bis 100 Mol-% 1,4-Dimethylolcyclohexan oder mindestens eines mit Alkylgruppen substituierten 1,4-Dimethylolcyclohexans und
b₂) 0 bis 30 Mol-% mindestens eines monomeren und/oder oligomeren Glykols mit 2 oder 3 C-Atomen pro Glykolsegment und mit einem zahlenmittleren Molekulargewicht Mₙ ≤ 500
besteht, wobei die Summe der Anteile der Komponenten b₁ und b₂ jeweils 100 Mol-% beträgt.

5. Beschichtungszusammensetzung nach einem der Ansprüche 1 bis 4, dadurch gekennzeichnet, daß als Komponente a₁ Malein- und/oder Fumarsäure eingesetzt worden ist.

6. Beschichtungszusammensetzung nach einem der Ansprüche 1 bis 5, dadurch gekennzeichnet, daß als Komponente a₂ Adipinsäure eingesetzt worden ist.

7. Beschichtungszusammensetzung nach einem der Ansprüche 1 bis 6, dadurch gekennzeichnet, daß als Komponente b₁ 1,4-Dimethylolcyclohexan eingesetzt worden ist.

8. Beschichtungszusammensetzung nach einem der Ansprüche 1 bis 7, dadurch gekennzeichnet, daß als Komponente b₂ monomeres und/oder oligomeres Ethylen- und/oder Propylenglykol mit einem zahlenmittleren Molekulargewicht Mₙ ≤ 200 eingesetzt worden ist.

9. Beschichtungszusammensetzung nach einem der Ansprüche 1 bis 8, dadurch gekennzeichnet, daß die Lackkomponente I
A) 35 bis 60 Gew.-% mindestens eines ungesättigten Polyesters (A),
B) 0 bis 20 Gew.-% mindestens einer weiteren ungesättigten polymeren Verbindung,
C) 29 bis 50 Gew.-% mindestens eines Reaktivverdünners,
D) 0 bis 15 Gew.-% mindestens eines organischen Lösungsmittels,
E) 0 bis 7 Gew.-% Pigmente und/oder Füllstoffe und
F) 1 bis 4 Gew.-% übliche Hilfs- und Zusatzstoffe enthält, wobei die Summe der Gewichtsanteile der Komponenten A bis F jeweils 100 Gew.-% beträgt.

10. Verfahren zum Beschichten von Holz und Holzwerkstoffen, bei dem eine lufttrocknende Beschichtungszusammensetzung aufgebracht und gehärtet wird, dadurch gekennzeichnet, daß eine Beschichtungszusammensetzung nach einem der Ansprüche 1 bis 9 aufgebracht wird.

11. Verwendung der Beschichtungszusammensetzungen nach einem der Ansprüche 1 bis 9 zur Beschichtung von Holz und Holzwerkstoffen.

12. Verwendung der Beschichtungszusammensetzungen nach einem der Ansprüche 1 bis 9 zur Beschichtung von Materialien, die bei der Weiterverarbeitung, Lagerung oder dem Gebrauch Temperaturschwankungen ausgesetzt sind.

## Claims

1. Coating composition based on a paint component I, which contains one or more unsaturated polyesters, reactive thinners, organic solvents if appropriate, and, if appropriate, conventional auxiliary substances and additives, and on a paint component II which contains a curing catalyst, characterized in that the paint component I contains at least one unsaturated polyester (A) which can be obtained from
a) 33 to 67 mol% of a mixture of
a₁) 30 to 90 mol% of at least one ethylenically unsaturated aliphatic dicarboxylic acid and
a₂) 10 to 70 mol% of at least one saturated aliphatic dicarboxylic acid having 6 to 10 carbon atoms per molecule,
b) 33 to 67 mol% of a mixture of
b₁) 50 to 100 mol% of 1,4 dimethylolcyclohexane or at least one 1,4-dimethylolcyclohexane substituted by alkyl groups and
b₂) 0 to 50 mol% of at least one monomeric and/or oligomeric glycol having 2 or 3 carbon atoms per glycol segment and a number average molecular weight Mₙ ≤ 500
and
c) 0 to 10 mol% of at least one polyol,
with the proviso that the sum of the amounts of the components a to c, the sum of the amounts of the components a₁ and a₂ and the sum of the amounts of the components b₁ and b₂ is in each case 100 mol%, the polyester (A) is present in the paint component I in an amount of 35 to 60 % by weight, based on the total weight of the paint component I, and has an acid value between 10 and 60 mg of KOH/g, an OH value between 5 and 100 mg of KOH/g and a number-average molecular weight between 800 and 2000.

2. Coating composition according to Claim 1, characterized in that the paint component I contains at least one unsaturated polyester (A) which can be obtained from
a) 50 to 60 mol% of the dicarboxylic acid component a,
b) 40 to 50 mol% of the diol component b and
c) 0 to 5 mol% of the polyol component c,
the sum of the amounts by weight of the components a to c being in each case 100 mol%.

3. Coating composition according to Claim 1 or 2, characterized in that the dicarboxylic acid component a of the polyester (A) consists of
a₁) 50 to 70 mol% of at least one ethylenically unsaturated aliphatic dicarboxylic acid and
a₂) 30 to 50 mol% of at least one saturated aliphatic dicarboxylic acid having 6 to 10 carbon atoms per molecule,
the sum of the amounts of the components a₁ and a₂ being in each case 100 mol%.

4. Coating composition according to any one of Claims 1 to 3, characterized in that the diol component b of the polyester (A) consists of
b₁) 70 to 100 mol% of 1,4-dimethylolcyclohexane or substituted by at least one 1,4-dimethylolcyclohexane groups and
b₂) 0 to 30 mol% of at least one monomeric and/or oligomeric glycol having 2 or 3 carbon atoms per glycol segment and having a number-average molecular weight Mₙ ≤ 500,
the sum of the amounts of the components b₁ and b₂ being in each case 100 mol%.

5. Coating composition according to any one of Claims 1 to 4, characterized in that maleic and/or fumaric acid was used as component a₁.

6. Coating composition according to any one of Claims 1 to 5, characterized in that adipic acid was used as component a₂.

7. Coating composition according to any one of Claims 1 to 6, characterized in that 1,4-dimethylolcyclohexane was used as component b₁.

8. Coating composition according to any one of Claims 1 to 7, characterized in that monomeric and/or oligomeric ethylene glycol and/or propylene glycol having a number average molecular weight Mₙ ≤ 200 was used as component b₂.

9. Coating composition according to any one of Claims 1 to 8, characterized in that the paint component I contains
A) 35 to 60 % by weight of at least one unsaturated polyester (A),
B) 0 to 20 % by weight of at least one other unsaturated polymer compound,
C) 29 to 50 % by weight of at least one reactive thinner,
D) 0 to 15 % by weight of at least one organic solvent,
E) 0 to 7 % by weight of pigments and/or fillers and
F) 1 to 4 % by weight of conventional auxiliary substances and additives, the sum of the amounts by weight of the components A to F being in each case 100 % by weight.

10. Process for the coating of wood and woodbase materials in which an air-drying coating composition is applied and cured, characterized in that a coating composition according to one of Claims 1 to 9 is applied.

11. Use of the coating compositions according to one of Claims 1 to 9 for the coating of wood and woodbase materials.

12. Use of the coating compositions according to one of Claims 1 to 9 for the coating of materials exposed to temperature fluctuations on further processing, storage or use.

## Revendications

1. Composition de revêtement à base d'un composant de laque I, qui contient un ou plusieurs polyesters insaturés, des diluants réactifs, le cas échéant des solvants organiques et, le cas échéant, des additifs et adjuvants usuels, et un composant de laque II, qui contient un catalyseur de durcissement, caractérisée en ce que le composant de laque I contient au moins un polyester (A) insaturé, que l'on peut obtenir à partir
a) de 33 à 67 % en moles d'un mélange
a₁) de 30 à 90 % en moles au moins d'un acide dicarboxylique éthyléniquement insaturé et
a₂) de 10 à 70 % en moles au moins d'un acide dicarboxylique aliphatique saturé ayant de 6 à 10 atomes de C par molécule,
b) de 33 à 67 % en moles d'un mélange
b₁) de 50 à 100 % en moles de 1,4-diméthylolcyclohexane ou au moins d'un 1,4-diméthylolcyclohexane substitué par des groupements alkyles et
b₂ de 0 à 50 % en moles au moins d'un glycol monomère et/ou oligomère ayant 2 ou 3 atomes de C par segment de glycol et un poids moléculaire moyen au nombre Mₙ ≤ 500 et
c) de 0 à 10 % en moles au moins d'un polyol,
sous réserve que non seulement la somme des proportions des composants a à c, mais aussi la somme des proportions des composants a₁ et a₂ ainsi que la somme des proportions des composants b₁ et b₂ soit à chaque fois de 100 % en moles, que le polyester (A) soit contenu dans le composant de laque I dans une quantité de 35 à 60 % en poids, par rapport au poids total du composant de laque I, et qu'il présente un indice d'acidité compris entre 10 et 60 mg de KOH/g, un indice OH compris entre 5 et 100 mg de KOH/g et un poids moléculaire moyen au nombre compris entre 800 et 2000.

2. Composition de revêtement selon la revendication 1, caractérisée en ce que le composant de laque I contient au moins un polyester (A) insaturé, que l'on peut obtenir à partir
a) de 50 à 60 % en moles du composant d'acide dicarboxylique a,
b) de 40 à 50 % en moles du composant de diol b et
c) de 0 à 5 % en moles du composant de polyol c,
la somme des proportions en poids des composants a à c étant à chaque fois de 100 % en moles.

3. Composition de revêtement selon la revendication 1 ou 2, caractérisée en ce que le composant d'acide dicarboxylique a du polyester (A) se compose
a₁) de 50 à 70 % en moles au moins d'un acide dicarboxylique aliphatique éthyléniquement insaturé et
a₂) de 30 à 50 % en moles au moins d'un acide dicarboxylique aliphatique saturé ayant de 6 à 10 atomes de C par molécule,
la somme des proportions des composants a₁ et a₂ étant à chaque fois de 100 % en moles.

4. Composition de revêtement selon l'une quelconque des revendications 1 à 3, caractérisée en ce que le composant de diol b du polyester (A) se compose
b₁) de 70 à 100 % en moles de 1,4-diméthylolcyclohexane ou au moins d'un 1,4-diméthylolcyclohexane substitué par des groupements alkyles et
b₂) de 0 à 30 % en moles d'un glycol monomère et/ou oligomère ayant 2 ou 3 atomes de C par segment de glycol et un poids moléculaire moyen au nombre Mn ≤ 500
la sommes des proportions des composants b₁ et b₂ étant à chaque fois de 100 % en moles.

5. Composition de revêtement selon l'une quelconque des revendications 1 à 4, caractérisée en ce que l'on a utilisé en tant que composant a₁ l'acide maléique et/ou l'acide fumarique.

6. Composition de revêtement selon l'une quelconque des revendications 1 à 5, caractérisée en ce que l'on a utilisé en tant que composant a₂ l'acide adipique.

7. Composition de revêtement selon l'une quelconque des revendications 1 à 6, caractérisée en ce que l'on a utilisé en tant que composant b₁ le 1,4-diméthylolcyclohexane.

8. Composition de revêtement selon l'une quelconque des revendications 1 à 7, caractérisée en ce que l'on a utilisé en tant que composant b₂ de l'éthylène monomère et/ou oligomère et/ou du propylèneglycol ayant un poids moléculaire moyen au nombre Mₙ ≤ 200.

9. Composition de revêtement selon l'une quelconque des revendications 1 à 8, caractérisée en ce que le composant de laque I contient
A) de 35 à 60 % en poids au moins d'un polyester insaturé (A),
B) de 0 à 20 % en poids au moins d'un composé polymère insaturé supplémentaire,
C) de 29 à 50 % en poids au moins d'un diluant réactif,
D) de 0 à 15 % en poids au moins d'un solvant organique,
E) de 0 à 7 % en poids de pigments et/ou de charges et
F) de 1 à 4 % en poids d'additifs et d'adjuvants usuels, la somme des proportions en poids des composants A à F étant à chaque fois de 100 % en poids.

10. Procédé de revêtement de bois et de matériaux ligneux, lors duquel on procède à l'application et au durcissement d'une composition de revêtement séchant à l'air, caractérisé en ce que l'on procède à l'application d'une composition de revêtement selon l'une quelconque des revendications 1 à 9.

11. Utilisation des compositions de revêtement selon l'une quelconque des revendications 1 à 9 en vue du revêtement de bois et de matériaux ligneux.

12. Utilisation des compositions de revêtement selon l'une quelconque des revendications 1 à 9 en vue du revêtement de matériaux, qui sont exposés, lors du traitement ultérieur, du stockage ou de l'utilisation, à des variations de température.
